# EUROPÄISCHE PATENTSCHRIFT

(11) **EP 1 730 019 B1**
(45) Veröffentlichungstag und Bekanntmachung des Hinweises auf die Patenterteilung: **08.08.2007**
(21) Anmeldenummer: 05716289.3
(22) Anmeldetag: 22.03.2005
(51) Int. Cl.: B62D 65/14

(54) **VERFAHREN UND EINRICHTUNGEN ZUM AUFBRINGEN VON FOLIEN AUF INNENWANDABSCHNITTE EINER FAHRZEUGKAROSSERIE**
METHOD AND DEVICES FOR APPLYING FILMS TO INTERIOR WALL SECTIONS OF VEHICLE BODYWORK
PROCEDE ET DISPOSITIFS POUR APPLIQUER DES FILMS SUR DES SECTIONS DE PAROIS INTERIEURES D'UNE CARROSSERIE DE VEHICULE

(30) Priorität: 01.04.2004 DE 102004015978
(43) Veröffentlichungstag der Anmeldung: 13.12.2006
(73) Patentinhaber: AKsys GmbH, 67547 Worms (DE)
(72) Erfinder: HOTZ, Ernst, 69250 Schönau (DE); POLAK, Josef, 55294 Bodenheim (DE)
(74) Vertreter: Leineweber, Jürgen
(86) Internationale Anmeldenummer: PCT/EP2005/003034
(87) Internationale Veröffentlichungsnummer: WO 2005/097587

(56) Entgegenhaltungen:
- EP-A- 0 492 663
- EP-A- 0 675 035
- DE-A1- 19 927 105

## Beschreibung

Die Erfindung betrifft ein Verfahren zum Aufbringen von Folien auf Innenwandabschnitte einer Fahrzeugkarosserie im Zuge einer Fließbandproduktion des Fahrzeugs. Außerdem bezieht sich die Erfindung auf eine für die Durchführung dieses Verfahrens geeignete Einrichtung.

Im Fahrzeugbau ist es bekannt, zur Erzielung akustischer Maßnahmen und auch zu Versteifungszwecken Folien einzusetzen. Zu den akustischen Maßnahmen gehören die (Körper-)Schalldämmung, -dämpfung, - isolation, -absorption, -reflexion usw. Auf größere Blechwandabschnitte aufgebrachte Folien haben nicht nur akustische, zum Beispiel entdröhnende, sondern auch stabilisierende bzw. versteifende Wirkungen.

Der Begriff "Folie" hat sich im hier betroffenen Fachjargon unabhängig von ihrem Zweck durchgesetzt. Es handelt sich um Schichtabschnitte, die je nach dem zu erzielenden Effekt den unterschiedlichsten Aufbau (Einschicht- oder Mehrschichtsysteme aus unterschiedlichen Werkstoffen, häufig Bitumen) haben können. Der allgemeine Begriff "Folie" wird im folgenden beibehalten.

Folien dieser Art werden in vielen Bereichen eines Fahrzeuges eingesetzt. Dazu gehören innere Oberflächenabschnitte von
- Türen (zwei oder vier),
- Seitenwänden (zum Beispiel bei zwei Türen),
- Radkästen, insbesondere die an den Fahrgastraum angrenzenden Radkästen,
- Bodenbleche (zum Beispiel je zwei vorne und/oder hinten), auch im Kofferraum,
- Blechwänden zwischen Motorraum und Fahrgastraum,
- Dachinnenseite (Überkopf),
- Motorraum.

Das Aufbringen von Folien auf Innenwandabschnitte von Fahrzeugen kann durch andere Aufbauten behindert sein. Dieses gilt zum Beispiel für Türen, die in der Regel aus Stabilitätsgründen 2-schalig aufgebaut sind. Die dem Fahrgastraum zugewandte Seitenwand eines Türkastens ist mit Öffnungen ausgerüstet, durch die auf die Innenfläche der äußeren Seitenwand zu applizierende Folien hindurch geführt werden müssen. Dieser Vorgang ist um so schwieriger, je kleiner die Öffnungen in der inneren Seitenwand des Türkastens oder je größer die Folien sind, zumal die Folien haftend wirken, sei es infolge von Klebekräften (auf die Folie aufgebrachte Klebeschicht) oder von Magnetkräften (in der Folie befindliches Magnetmaterial, insbesondere in Form von Pulvern). Applikationen von Folien dieser Art sind zeitaufwendig und nicht positionsgenau.

Die Ablage bzw. das Aufbringen von Folien auf Innenwandabschnitte von Fahrzeugen oder Fahrzeugteilen erfolgte ursprünglich von Hand. Bei modernen Fertigungslinien waren häufig zehn und mehr Personen damit beschäftigt, verschiedene, jeweils angelieferte Folien auf die dazu vorgesehenen Innenwandabschnitte aufzubringen. In dieser Phase ist die Karosserie noch im Rohzustand, das heißt, die Karosserieteile sind zusammengeschweißt, ihre Oberfläche ist grundiert. Damit die Folien bis zu ihrem endgültigen Verschmelzen mit dem jeweiligen Blechwandabschnitt auf vertikalen Flächen oder bei der Überkopfmontage haften bleiben, haben sie - wie bereits erwähnt - haftende Eigenschaften. Dazu können sie auf einer Seite mit einer Haftkleberschicht ausgerüstet sein. Eine andere Möglichkeit besteht darin, mit ferro-magnetischen Zusätzen versehene Folien einzusetzen, die auf den Blechabschnitten aufgrund von Magnetkräften vorläufig haften. Nach dem in dieser Weise durchgeführten Aufbringen der Folien auf die zugehörigen Innenwandabschnitte der Rohkarosserie, erfolgt deren Lackierung.

Üblicherweise werden mehrere Lackschichten aufgetragen. Anschließend wird die Karosserie durch einen Ofen hindurch geführt, in dem die Trocknung des Lackes stattfindet. Außerdem erfolgt durch die Wärmewirkung das endgültige Aufschmelzen der Folien auf ihren jeweiligen Wandabschnitten. Die dadurch erreichte vollflächige Auflage der Folien auf ihrer jeweiligen Unterlage ist eine notwendige Voraussetzung dafür, dass der mit dem Aufkleben der Folien gewünschte Effekt auch sicher erreicht wird.

Nachteilig an dem beschriebenen Verfahren des Aufbringens der Folien auf ihre zugehörigen Blechabschnitte per Hand ist, dass die Entstehung von Staub und insbesondere Flusen unvermeidbar ist. Diese bleiben auf der Oberfläche der Rohkarosserie haften, welche anschließend lackiert wird. Die Folge ist, dass die in den Lackschichten eingefangenen Flusen zu ungleichmäßigen Lackoberflächen führen. Diese müssen durch Schleifen, erneutes Lackieren und Trocknen nachgearbeitet werden. Weiterhin ist das bekannte Verfahren aufgrund des hohen Aufwandes an Handarbeit relativ teuer.

Um die geschilderten Nachteile zu vermeiden, ist es aus der DE-A1-199 27 105 bekannt, einen Roboter, d.h., einen Apparat mit einem mehrgliedrigen Arm und einem daran beweglich gehalterten Greifgestell, einzusetzen. Mit Hilfe des Greifgestells wird/werden eine oder mehrere Folien außerhalb der Karosserie aufgenommen werden, danach die Folie(n) zusammen mit dem Greifgestell mit Hilfe des Armes durch eine Öffnung in der Karosserie zum Ablageort transportiert und dort abgelegt.

Dadurch, dass das Aufbringen der Folien nicht mehr von Hand erfolgt, ist eine wesentliche Quelle für die Entstehung von Staub oder Flusen beseitigt. Zeit- und kostenaufwendige Nacharbeiten an Lackoberflächen entfallen. Weiterhin kann die Ablage der Folien auf die zugehörigen Innenwandabschnitte wesentlich genauer erfolgen, so dass vor allem die gewünschten akustischen Wirkungen zuverlässiger erreicht werden können. Schließlich ist der Einsatz von die Ablage der Folien ausführenden Apparaten langfristig kostengünstiger.

Bei zur Zeit im Trend liegenden Großraumfahrzeugen mit einer Mehrzahl von Fenstern, häufig auch mehreren Schiebedächern, und bei Wohnanhängern sowie Wohnmobilen ebenfalls besteht die Notwendigkeit, eine Vielzahl unterschiedlich großer und individuell geschnittener oder vorgeformter Folien auf eine entsprechende Vielzahl von Innenwandabschnitten des jeweiligen Fahrzeugs aufzubringen. Das Greifgestell des vorbekannten Roboters muss deshalb, selbst wenn es mehrere Folien aufnehmen kann, mehrfach in die Karosserie eingeführt und wieder herausgeführt werden. Dadurch ergeben sich zum einen relativ lange Montagezeiten. Zum anderen sind die technischen Anforderungen an die Länge sowie Gelenkigkeit der Rotorarme sowie an die Ausrichtmöglichkeiten des Greifgestells hoch, um von außen alle mit Folien zu belegenden Orte- insbesondere die auf der Dachinnenseite befindlichen, relativ hoch liegenden und überkopf zu belegenden Stellen- zu erreichen.

Der vorliegenden Erfindung liegt die Aufgabe zugrunde, bei den Verfahren und Vorrichtungen, die dem Aufbringen von Folien auf Innenwandabschnitte einer Fahrzeugkarosserie dienen, sowohl Montagezeiten als auch den technischen Aufwand zu reduzieren.

Erfindungsgemäß wird diese Aufgabe durch die kennzeichnenden Merkmale der Patentansprüche gelöst.

Beim Gegenstand der Erfindung befindet sich der Roboter während der Applikation der Folien im Innenraum der Karosserie. Die abzulegenden Folien werden bis in die unmittelbare Nähe - zweckmäßig bis in den Innenraum - der Karosserie transportiert. Dadurch ergeben sich kurze Montagezeiten. Außerdem besteht nicht mehr die Notwendigkeit, dass der Roboter alle mit Folien zu belegenden Stellen von außen erreichen muss. Er kann wesentlich kleiner und einfacher ausgeführt sein. Die Anforderungen an seine Gelenkigkeit sind wesentlich geringer.

Weitere Vorteile und Einzelheiten der Erfindung sollen anhand eines in den Figuren 1 bis 3 dargestellten Ausführungsbeispielen erläutert werden. Es zeigen
- Figur 1: eine Seitenansicht des Ausführungsbeispieles sowie die Silhouette einer Rohkarosserie.
- Figur 2: eine Seitenansicht wie in Figur 1 mit in den Innenraum der Rohkarosserie eingefahrenem Roboter und
- Figur 3: eine Draufsicht auf das Ausführungsbeispiel in seiner in Figur 2 dargestellten Position (ohne Rohkarosserie).

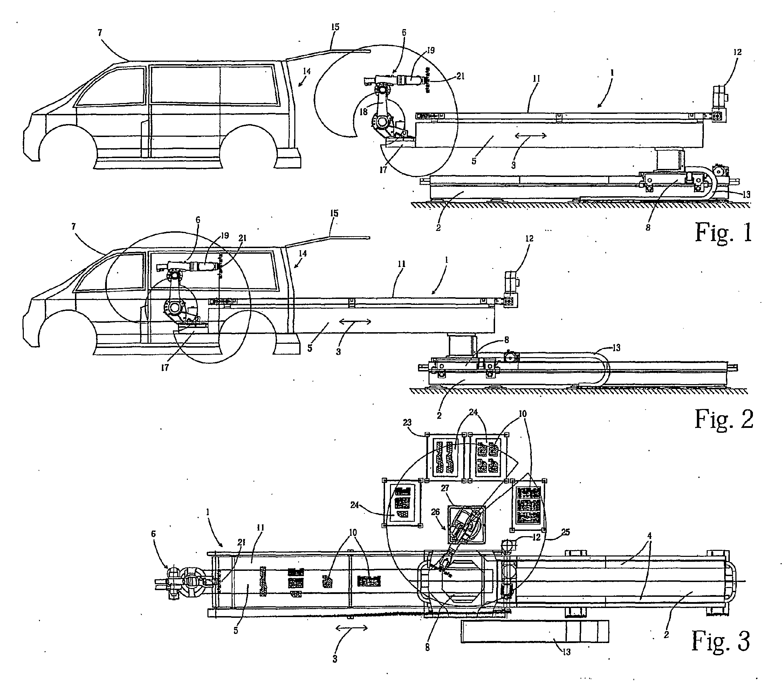

In den Figuren sind die erfindungsgemäße Vorrichtung mit 1, ein langgestreckt ausgebildetes Basisteil mit 2, ein ebenfalls lang gestreckter, auf dem Basisteil 2 längsverschiebbar (Doppelpfeil 3) auf Schienen 4 geführter Schlitten mit 5, der Applikationsroboter mit 6 und die mit Folien 10 (Fig. 3) auszurüstende Karosserie mit 7 bezeichnet. Der längsverschiebbar geführte Schlitten 5 stützt sich im Bereich eines seiner beiden Enden über einen auf den Schienen 4 geführten Antrieb 8 auf dem Basisteil 2 ab. Basisteil 2 und Schlitten 5 sind gleichachsig angeordnet, so dass sich der Schlitten 5 in seinem zurückgezogenen Zustand (Figur 1) oberhalb des Basisteils 2 befindet. Sein dem Antrieb 8 gegenüber liegendes Ende trägt den Applikationsroboter 6. Außerdem trägt der Schlitten 5 ein Fördermittel 11 mit seinem Antriebsmotor 12. Im Zusammenhang mit der Beschreibung der Figur 3 wird im einzelnen darauf noch eingegangen. Mit 13 ist eine Schleppkette bezeichnet, über die die Energieversorgung und die Steuerung sämtlicher auf dem Schlitten 5 befindlicher Baugruppen erfolgt.

Die mit Folien 10 zu bestückende Karosserie 7 wird im Zuge ihres Fließbandtransportes derart an die erfindungsgemäße Einrichtung 1 angenähert und ausgerichtet, dass die Öffnung, durch die der Roboter 6 in den Innenraum der Karosserie 7 eingefahren werden soll, der mit dem Roboter 6 ausgerüsteten Stirnseite der Einrichtung 1 zugewandt ist. Im dargestellten Fall handelt es sich um die Öffnung 14 in der Karosserie 7, die durch das Anheben einer Heckklappe 15 entsteht.

Der Roboter 6 stützt sich auf einem Träger 17 an der freien Stirnseite des Schlittens 5 drehbar ab und umfasst mehrere Gelenkarme 18, 19, die den nur schematisch dargestellten Greifer 21 tragen und bewegen. Die Dimensionierung des Roboters 6 und seiner Bestandteile ist so gewählt, dass er in seiner in die Karosserie eingefahrenen Position (Figur 2) mit seinem Greifer 21 alle Innenwandbereiche, die mit Folien ausgerüstet werden müssen, erreichen kann. Eine bei relativ langen Fahrzeugen eventuell notwendige Verschiebung des Roboters 6 in Längsrichtung der Karosserie kann mit Hilfe des Schlittens 5 realisiert werden.

Der Träger 17 des Roboters 6 kann mit einer zweckmäßig nach unten ausfahrbaren Stütze ausgerüstet sein. Diese ermöglicht es, dass sich der Roboter 6 in seiner in den Innenraum der Karosserie 7 eingefahrenen Betriebsstellung auf dem Boden der Karosserie 7 abstützt.

Figur 3 lässt die Art und Weise der Zuführung der Folien 10 von einer Zwischenablage 23 zum Roboter 6 erkennen. Die Zwischenablage 23 befindet sich neben Basisteil 2 und Schlitten 5, und zwar im Bereich des dem Roboter 6 gegenüberliegenden Endes der Transportmittel 11, wenn sich der Roboter 6 in seiner ausgefahrenen Stellung befindet. Die Zwischenablage 23 umfasst mehrere - beim dargestellten Ausführungsbeispiel vier - z.B. auf Paletten 24 befindliche Stapel mit Folien 10 verschiedener Abmessungen. Sie sind im Bereich der Peripherie einer Kreisfläche 25 angeordnet, innerhalb der sich auch das Ende der Fördermittel 11 befindet. Im Zentrum dieser Kreisfläche 25 befindet sich ein Beschickungsroboter 26, der sich auf einem Basisteil 27 drehbar abstützt und dessen Gelenkarm mit 28 bezeichnet ist. Seine Greifmittel sind im einzelnen nicht dargestellt.

Bei der geschilderten Anordnung der Zwischenablage 23 ist der Beschickungsroboter 26 in der Lage, die Folien 10 in der vom Applikationsroboter 6 benötigten Reihenfolge von den Folienstapeln abzuheben und auf den Fördermitteln 11 abzulegen. Der sich innerhalb der Karosserie 7 befindende Applikationsrotor 6 ergreift die Folien 10 einzeln nacheinander oder - wenn die Greifmittel entsprechend ausgebildet sind auch mehrere nebeneinander auf die Fördermittel 11 abgelegte Foliensätze und bringt sie auf die zugehörigen Innenwandabschnitte auf. Als Fördermittel 11 dient zweckmäßig ein Förderband, auf das die Folien 10 letztlich auch per Hand abgelegt werden könnten. Zweckmäßig ist jedoch die Verwendung des beschriebenen Beschickungsroboters 26, so dass die Bestückung der Karosserie 7 mit Folien 10 genau und vollautomatisch ablaufen kann.

Das beschriebene System ist mit einer programmierbaren Steuerung ausgerüstet, die in Figur 3 lediglich als Block 31 dargestellt ist. Über im einzelnen nicht dargestellte, zweckmäßig - soweit nötig - in die Schleppkette 13 integrierte Leitungen steht die Steuerung 31 mit den beiden Robotern 6, 26 sowie mit den Antrieben 8 (Schlitten 5) und 12 (Fördermittel 11) in Verbindung, so dass das beschriebene Verfahren entsprechend den Programmvorgaben, die z.B. den Fahrzeugtyp und dessen Modellvariante berücksichtigen, abläuft.

Die Figuren zeigen die Karosserie 7 eines Großraumfahrzeuges mit geöffneter Heckklappe 15. In diesem Fall wird der Roboter 6 etwa in Richtung der Längsachse der Karosserie 7 eingefahren. Die Beschickung der Karosserie kann auch durch andere Öffnungen in der Karosserie 7 erfolgen. Natürlich ist die Erfindung auch einsetzbar bei Karosserien für Fahrzeuge normaler Größe, insbesondere Kombifahrzeugen. Auch der Motorraum eines Fahrzeuges kann entsprechend der Erfindung mit Folien ausgerüstet werden.

In Bezug auf Einzelheiten zu den einsetzbaren Greifern der Roboter wird auf den Inhalt der bereits zitierten DE-A1-199 27 105 hingewiesen. In dieser Schrift sind Greifgestelle offenbart, die eine oder mehrere Folien mit den unterschiedlichsten Eigenschaften in Bezug auf Größe, Aufbau, Form etc. aufnehmen und ablegen können. Offenbart ist in der genannten Schrift auch die Steuerung und/oder Kontrolle des Montageverfahrens mit Hilfe einer Kamera. Auch bei der vorliegenden Erfindung können diese Maßnahmen Anwendung finden. Die Kamera ist in diesem Fall z.B. auf dem Gelenkarm des Roboters 6 befestigt und liefert ihre Signale an die Steuerung 31.

## Patentansprüche

1. Verfahren zum Aufbringen von Folien (10) auf Innenwandabschnitte einer Fahrzeugkarosserie (7) mit Hilfe eines Apparates oder Roboters (6) mit einem mehrgliedrigen Gelenkarm (18, 19) und daran angeordneten Greifmitteln (21) für die Folien, **dadurch gekennzeichnet, dass** der Roboter (6) durch eine Öffnung (14) in den Innenraum der Karosserie (7) eingefahren wird, dass die aufzubringenden Folien (10) mit Hilfe von Transportmitteln (11) in die Nähe oder in den jeweiligen Innenraum der Karosserie (7) gefördert werden und dass die angelieferten Folien (10) mit Hilfe des Roboters (6) und seiner Greifmittel (21) von den Fördermitteln aufgenommen und auf die jeweiligen Innenwandabschnitte aufgebracht werden.

2. Verfahren nach Anspruch 1, **dadurch gekennzeichnet, dass** die Transportmittel (11) die vom Roboter (6) benötigten Folien (10) von einer Zwischenablage (23) bis in die Nähe des Roboters (6) fördern.

3. Verfahren nach Anspruch 2, **dadurch gekennzeichnet, dass** die jeweils vom Roboter (6) benötigten Folien (10) mit Hilfe eines weiteren Roboters (26) auf die Fördermittel (11) aufgelegt werden.

4. Verfahren nach Anspruch 1, 2 oder 3, **dadurch gekennzeichnet, dass** die Richtung, mit der der Beschickungsroboter (6) durch eine Öffnung (14) in den Innenraum der Karosserie (7) eingefahren wird, im wesentlichen der Richtung der Längsachse der Karosserie (7) entspricht.

5. Verfahren nach einem der Ansprüche 1 bis 4, **dadurch gekennzeichnet, dass** es mit Hilfe einer Kamera gesteuert und/oder kontrolliert wird.

6. Vorrichtung zum Aufbringen von Folien (10) auf Innenwandabschnitte einer Fahrzeugkarosserie (7) mit Hilfe eines Apparates oder Roboters (6) mit einem mehrgliedrigen Gelenkarm (18, 19) und daran angeordneten Greifmitteln (21) für die Folien (10), **dadurch gekennzeichnet, dass** sich der Roboter (6) im Bereich der Stirnseite eines längsverschiebbaren Schlittens abstützt und dass der Schlitten weiterhin Fördermittel trägt, die sich in derjenigen Betriebsstellung des Roboters (6), bei der er sich innerhalb der Rohkarosserie (7) befindet, zwischen dem Roboter (6) und einer Zwischenablage (23) erstrecken.

7. Vorrichtung nach Anspruch 6, **dadurch gekennzeichnet, dass** Bestandteil der Zwischenablage (23) ein weiterer Roboter (26) ist, mit dessen Hilfe die vom Applikationsroboter (6) benötigten Folie n auf die Fördermittel (11) aufgelegt werden.

8. Vorrichtung nach Anspruch 6 oder 7, **dadurch gekennzeichnet, dass** sich der Schlitten (5) auf einem Basisteil (2) längsverschiebbar abstützt, dass Schlitten (5) und Basisteil (2) langgestreckt ausgebildet sind und dass sie während ihrer Ruhestellung übereinander angeordnet sind.

9. Vorrichtung nach einem der Ansprüche 6, 7 oder 8, **dadurch gekennzeichnet, dass** die Fördermittel (11) als Förderband ausgebildet sind.

10. Vorrichtung nach einem der Ansprüche 6 bis 9, **dadurch gekennzeichnet, dass** die Greifmittel der Roboter (6) und (26) so ausgebildet sind, dass sie Foliensätze, bestehend aus mehreren Einzelfolien (10), aufnehmen und ablegen können.

11. Vorrichtung nach einem der Ansprüche 6 bis 10, **dadurch gekennzeichnet, dass** sich der Roboter (6) über einen Träger (17) am Schlitten (5) abstützt und dass der Träger (17) mit einer zweckmä-ßig nach unten ausfahrbaren Stütze ausgerüstet ist.

## Claims

1. A method for applying material foils (10) onto interior wall sections of a vehicle bodywork (7) with the help of an apparatus or robotic device (6) having a multi-sectioned arm (18, 19) and attached gripping means (21) for the material foils, and said method **characterized by**
the robotic device (6) being extended through an opening (14) into the interior of the vehicle bodywork (7), the material foil (10) to be applied being supplied, with the help of conveyor means (11), into the vicinity or into the interior of the individual vehicle bodywork (7) and the material foils (10) thus supplied being picked up from the conveyor means by the robotic device (6) with its gripping means (21) and, subsequently, being applied to the individual interior wall sections.

2. The method as set forth in claim 1, further **characterized by**
the conveyor means (11) conveying the material foils (10) required by the robotic device (6) from an intermediate storage location (23) into proximity of the robotic device (6).

3. The method as set forth in claim 2, further **characterized by**
the material foils (10) required by the robotic device (6) being loaded onto the conveyor means (11) with the help of an additional robotic device (26).

4. The method as set forth in any one of claims 1, 2 or 3, further **characterized by**
the direction in which the robotic device (6) is extended through an opening (14) into the interior of the vehicle bodywork (7) corresponding, essentially, to the direction of the length axis of the vehicle bodywork (7).

5. The method as set forth in any one of claims 1 through 4, further **characterized by** being controlled and/or monitored with the help of a camera.

6. A device for applying material foils (10) onto interior wall sections of a vehicle bodywork (7) with the help of an apparatus or robotic device (6) having a multi-sectioned arm (18. 19) and attached gripping means (21) for the material foils, and said device **characterized by**
the robotic device (6) being supported at the front face of a laterally moveable sled and said sled carrying additional conveying means which, when the robotic device (6) is positioned inside the vehicle bodywork (7), are themselves positioned between the robotic device (6) and the intermediate storage location (23).

7. The device as set forth in claim 6, further **characterized by**
an additional robotic device (26) being part of the intermediate storage location (26), with the help of which the material foils (11) required by the robotic applicator device (6) are positioned onto the conveying means (11).

8. The device as set forth in claim 6 or 7, further **characterized by**
the sled (5) supporting itself in a laterally moveable way on a base structure (2), and said sled (5) and base structure (2) both having an elongated shape and, in their rest position, the sled being arranged on top of the base structure.

9. The device as set forth in any one of claims 6, 7 or 8, further **characterized by**
the conveying means (11) being constructed in the form of a conveyor belt.

10. The device as set forth in any one of claims 6 through 9, further **characterized by**
the gripping means (26) of the robotic device (6) being designed such that they can pick up and deposit the material foil batches consisting of several individual material foils (10).

11. The device as set forth in any one of claims 6 through 10, further **characterized by**
the robotic device (6) being supported on the sled (5) by a girder (17) and said girder (17) suitably being provided with a downward-extendable support structure.

## Revendications

1. Procédé d'application des feuilles (10) sur des segments de paroi intérieure d'une carrosserie de véhicule (7) à l'aide d'un appareil ou d'un robot (6) muni d'un bras articulé (18, 19) à plusieurs sections et de dispositifs de prise (21) disposés sur celui-ci pour les feuilles, **caractérisé en ce que** le robot (6) est amené par une ouverture (14) dans l'intérieur de la carrosserie (7), les feuilles (10) à appliquer sont transportées à l'aide de moyens de transport (11) à proximité ou dans l'intérieur respectif de la carrosserie (7), et les feuilles (10) fournies sont prises à l'aide du robot (6) et de ses dispositifs de prise (21) depuis les moyens de transport puis appliquées sur les segments de paroi intérieure concernés.

2. Procédé selon la revendication 1, **caractérisé en ce que** les moyens de transport (11) transportent les feuilles (10) nécessaires pour le robot (6) depuis un dépôt intermédiaire (23) jusqu'à proximité du robot (6).

3. Procédé selon la revendication 2, **caractérisé en ce que** les feuilles (10) nécessaires pour le robot (10) sont placées sur les moyens de transport (11) à l'aide d'un autre robot (26).

4. Procédé selon la revendication 1, 2 ou 3, **caractérisé en ce que** la direction dans laquelle le robot d'alimentation (6) est amené par une ouverture (14) à l'intérieur de la carrosserie (7) correspond essentiellement à la direction de l'axe longitudinal de la carrosserie (7).

5. Procédé selon l'une des revendications 1 à 4, **caractérisé en ce qu'**il est commandé et/ou contrôlé à l'aide d'une caméra.

6. Dispositif pour appliquer des feuilles (10) sur des segments de paroi intérieure d'une carrosserie de véhicule (7) à l'aide d'un appareil ou d'un robot (6) muni d'un bras articulé (18, 19) à plusieurs sections et de dispositifs de prise (21) disposés sur celui-ci pour les feuilles (10), **caractérisé en ce que** le robot (6) prend appui dans la zone de la face frontale d'un chariot mobile longitudinalement, et le chariot porte en outre des moyens de transport qui s'étendent entre le robot (6) et un dépôt intermédiaire (23) si le robot (6) se trouve dans sa position de fonctionnement à l'intérieur de la carrosserie brute (7).

7. Dispositif selon la revendication 6, **caractérisé en ce que** le dépôt intermédiaire (23) comprend un autre robot (26) à l'aide duquel les feuilles nécessaires pour le robot d'application (6) sont placées sur les moyens de transport (11).

8. Dispositif selon la revendication 6 ou 7, **caractérisé en ce que** le chariot (5) prend appui de façon mobile longitudinalement sur un élément de base (2), le chariot (5) et l'élément de base (2) présentant une forme allongée et étant juxtaposés en position de repos.

9. Dispositif selon l'une des revendications 6, 7 ou 8, **caractérisé en ce que** les moyens de transport (11) représentent une bande convoyeuse.

10. Dispositif selon l'une des revendications 6 à 9, **caractérisé en ce que** les dispositifs de prise des robots (6) et (26) sont conçus pour pouvoir saisir et déposer des jeux de feuilles composés de plusieurs feuilles (10) individuelles.

11. Dispositif selon l'une des revendications 6 à 10, **caractérisé en ce que** le robot (6) prend appui sur le chariot (5) au moyen d'un support (17), et le support (17) est muni d'un appui qui, de façon fonctionnelle, est amovible vers le bas.
